# EUROPÄISCHE PATENTANMELDUNG

(11) **EP 0 750 367 A1**
(43) Veröffentlichungstag der Anmeldung: **27.12.1996**
(21) Anmeldenummer: 96108983.6
(22) Anmeldetag: 05.06.1996
(51) Int. Cl.: H01R 13/56, G07C 7/00

(54) **Steckverbinder für die Geberleitungen insbesondere für Fahrtschreibersysteme**

(30) Priorität: 24.06.1995 DE 29510264 U
(71) Anmelder: VDO Adolf Schindling AG, 60326 Frankfurt/Main (DE)
(72) Erfinder: Modest, Otmar, Ing. (grad.), 78078 Niedereschach (DE); Busse, Andrea, Dipl.-Ing., 78050 Villingen-Schwenningen (DE); Rapp, Helmut, 78048 Villingen-Schwenningen (DE)

(57) **Zusammenfassung**

Um bei einem rechtwinkligen Abgang von in einem flexiblen, metallischen Schutzrohr (35) aufgenommenen Geberleitungen (39, 40. 41, 42) eines Steckverbinders (10) einen möglichst geringen Abstand (a) zwischen einer durch die Stirnseite des Steckers (36) bestimmten Ebene und dem abgewinkelten Schutzrohr (35) zu erzielen, aber auch eine dem Schutzrohr (35) entsprechende Eingriffsicherheit im Übergangsbereich zwischen dem Stecker (36) und dem Schutzrohr (35) zu erhalten, wird vorgeschlagen, eine gekrümmte, metallische Tülle (1) zu verwenden und diese unter Anwendung eines Innenhochdruck-Umformverfahrens herzustellen.

## Beschreibung

Die Erfindung betrifft einen Steckverbinder für die Geberleitungen insbesondere für Fahrtschreibersysteme mit im wesentlichen rechtwinkligem Abgang und mit einem den Geberleitungen zugeordneten metallischen Schutzrohr.

Die Aufzeichnungen von in Kraftfahrzeugen eingesetzten Fahrtschreibern dienen bekanntlich der Kontrolle der Betriebsweise und des Nutzungsgrades der Fahrzeuge sowie als Arbeitszeit- und Pausennachweis für die Fahrer. Verständlicherweise sind die Aufzeichnungen Manipulationen ausgesetzt mit dem Ziel, die Aufzeichnungen zu verändern oder nicht bzw. nur verstümmelt zustande kommen zu lassen. Zwar sind bisher verschiedene passive Maßnahmen vorgenommen worden, bei denen es insbesondere durch geeignete Registrierung ermöglicht wurde, daß im nachhinein festgestellt werden konnte, daß Manipulationen erfolgt sind, ein aktiver Manipulationsschutz bzw. eine erhebliche Behinderung Manipulationen vornehmen zu können ist jedoch nur dadurch erzielbar, daß die Geberleitungen in einen metallischen Schutzrohr verlegt werden und der Übergang zwischen dem metallischen Schutzrohr und einem Stecker, dem durch das Schutzrohr vorgegebenen Standard bezüglich Zugriffssicherheit zu den Geberleitungen entspricht. Selbstverständlich ist es wegen des Kombinationseffektes zweckmäßig, die in bereits eingebauten Fahrtschreibern vorgesehenen Mittel für einen Manipulationsnachweis weiterhin zu nutzen und diese Mittel auch in neuen Fahrtschreibern zu realisieren. Der Vorteil ist dabei, daß die Ausrüstung eines Fahrtschreibersystems mit dem erwähnten aktiven Manipulationsschutz eine auf einfache Weise nachrüstbare Maßnahme darstellt. Auf der anderen Seite sind Einbau- und Verlegesituationen gegeben oder werden vom Kunden gefordert, die relativ enge Umlenkungen der Geberleitungen erfordern, welche bei einem geraden Abgang von dem betreffenden Steckverbinder mit einem, wenn auch in gewissen Grenzen flexiblen, metallischen Schutzrohr im Gegensatz zu einem Kabel, nicht verwirklicht werden können.

Die Aufgabe der vorliegenden Erfindung bestand somit darin, unter Beibehaltung einer einem flexiblen metallischen Schutzrohr entsprechenden Zugriffssicherheit eine Umlenkung für die Geberleitungen eines Fahrtschreibersystemes derart zu schaffen, daß bei dem betreffenden Steckverbinder der Abstand zwischen einer beispielsweise durch die Stirnseite des Steckers bestimmten Ebene und dem zu dieser Ebene im wesentlichen parallel liegendem Schutzrohr ein Minimum beträgt.

Die Lösung der Aufgabe beschreibt der Schutzanspruch 1. Weitere Ausgestaltungen der Erfindung gehen aus den Unteransprüchen hervor.

Wie bereis dargelegt war die gestellte Aufgabe mit einem flexiblen metallischen Schutzrohr, dem, um eine durchgängige Zugriffssicherheit zu gewährleisten, eine metallische Tülle zur Aufnahme des Steckers des Steckverbinders zugeordnet ist, nicht zu lösen. Ein Lösungsansatz bietet der Gedanke, eine für den geraden Abgang der Geberleitungen von einem Steckverbinder vorgesehene und im Tiefziehverfahren hergestellte Tülle zu biegen. Infolge des erforderlichen, relativ kleinen Biegeradius wird dabei die Tülle im Zugbereich stark gestreckt und im Druckbereich derart gestaucht, daß einerseits ein Reißen andererseits ein Knicken nicht ausgeschlossen werden kann selbst wenn das durch das Tiefziehen stark beanspruchte Material der Tülle vor dem Biegen zusätzlich noch geglüht werden sollte. Das heißt, daß ein reproduzierbares Verformen der Tülle durch Biegen für die Serienfertigung nicht geeignet ist zumal eine erhebliche Deformation der Tülle erfolgt und die Funktion einer Führung zur Umlenkung der durchzuschleifenden Geberleitungen in Frage gestellt ist.

Ein anderer Weg zur Herstellung einer gekrümmten Tülle ist andererseits dadurch gegeben, daß die Tülle aus einzelnen Teilen zusammengebaut wird. Diese Lösung ist arbeitsintensiv und erfordert genaue Passungen sowie Hartlöten des in diesem Falle zu verwendenden Chrom-Nickel-Stahls. Dabei besteht das Problem der Dichtigkeit. Außerdem ist beim Zusammenfügen und Verbinden der Tülle Grat- und Stufenbildung nicht zu vermeiden.

Der Anmeldungsgegenstand hat demgegenüber den Vorteil, daß zur Herstellung einer gebogenen, grat- und stufenfreien Tülle lediglich ein Rohrstück gleichen Durchmessers in eine den Konturen der zu fertigenden Tülle entsprechenden Kavität eines zweiteiligen Werkzeuges eingelegt und mittels des Innenhochdruck-Umformverfahrens umgeformt wird, wobei durch Nachschieben von Rohlingmaterial die erheblichen Durchmesserunterschiede zwischen dem Stecker- und der Schutzrohrfassung der Tülle sowie ein mittlerer Biegeradius, kleiner als der Rohlingdurchmesser herstellbar sind. Durch geeignete Formgestaltung der Kavität im Werkzeug und entsprechendes Beschneiden des umgeformten Rohlings kann auch ein Bund ausgebildet werden, welcher dem Befestigen der Tülle und damit des Steckverbinders mittels einer Überwurfmutter an der Steckerfassung der Leitungskupplung dient. Im ungünstigsten Falle ist eine Nacharbeit der einteilig hergestellten Tülle nur insofern erforderlich als der Bund nachträglich angebördelt werden muß. Ferner sei erwähnt, daß das gewählte Umformverfahren auch Krümmungen ermöglicht, die nicht konzentrisch verlaufen.

Im folgenden sei die Erfindung anhand der beigefügten Zeichnungen näher erläutert.
Es zeigen:
Fig. 1 eine teilweise geschnittene Ansicht eines ersten Ausführungsbeispiels der Tülle,
Fig. 2 eine teilweise geschnittene Ansicht eines zweiten Ausführungsbeispiels der Tülle,
Fig. 3 eine teilweise geschnittene Ansicht des erfindungsgemäßen Steckverbinders in Zuordnung zu einer eine Trennwand durchgreifenden Leitungskupplung mit einem auf der Gegenseite der Trennwand in Ansicht dargestellten Steckverbinder mit geradem Abgang der Geberleitungen.

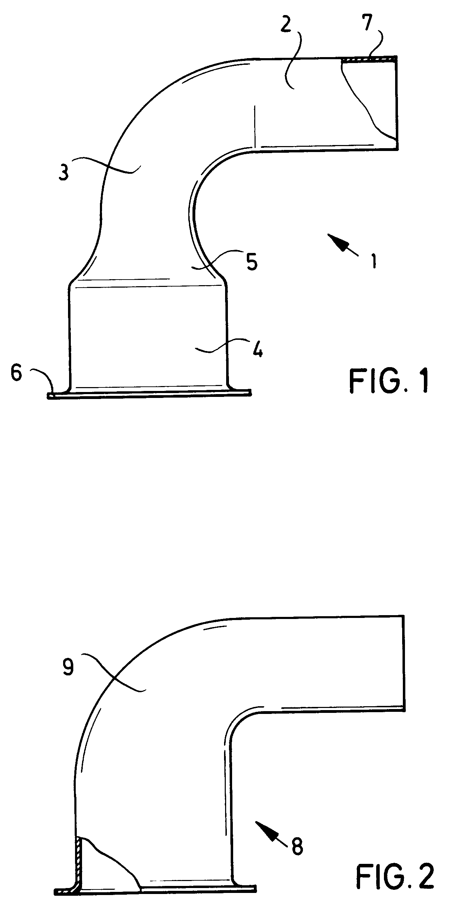

Die in Figur 1 dargestellte mittels des Innenhochdruck-Umformverfahrens hergestellte Tülle 1 weist einen zylindrischen Abschnitt 2, einen relativ kurzen konzentrischen Abschnitt 3 und einen zylindrischen Abschnitt 4 auf, in den der zylindrische Abschnitt 4 mit einem im wesentlichen konischen Abschnitt 5 übergeht. Der zylindrische Abschnitt 4 schließt mit einem Bund 6 ab. Die relativ dünne Wand der Tülle 1 in der Größenordnung von 0,5 mm ist mit 7 bezeichnet. Für die Beurteilung der Problematik der Herstellung dieses Bauteils ist außer der geringen Wandstärke und des geringen Krümmungsradius des kozentrischen Abschnitts 3 insbesondere auch das relativ große Durchmesser- und somit Aufweitverhältnis zwischen den zylindrischen Abschnitten 2 und 4 von Bedeutung.

Im Gegensatz zur Tülle 1 weist die Tülle 8 gemäß Figur 2 bei sonst gleichen Abmessungen einen nicht konzentrischen Abschnitt 9 mit einem sehr kleinen Innenradius und einem relativ großen Außenradius auf mit dem Vorteil des leichteren Durchschleifens der zu schützenden Geberleitungen.

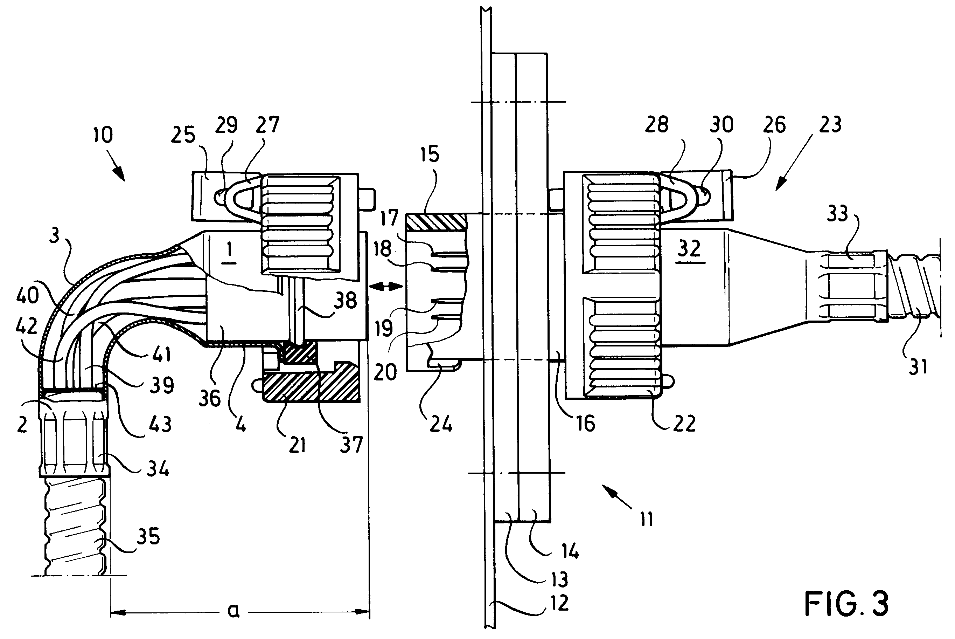

Die Figur 3 zeigt den Steckverbinder 10 im Zustand des Verbindens mit oder Trennens von einer Leitungskupplung 11, die der Durchführung der Geberleitungen durch eine Trennwand 12 beispielsweise die Trennwand zwischen Fahrerhaus und Motorraum eines Fahrzeuges gegebenenfalls auch der Aufteilung relativ langer in Schutzrohren verlegter und damit schwingungsempfindlicher Geberleitungen in kürzere Abschnitte dient. Die Leitungskupplung 11, die unter Zwischenlage einer flachen Dichtung 13 mittels eines Flansches 14 an der Trennwand 12 befestigt ist - der Einfachheit halber sind in Figur 3 die hierfür beispielsweise in Frage kommenden Blindnietverbindungen lediglich strichpunktiert dargestellt - weist beidseitig des Flansches 14 Steckerfassungen 15 und 16 auf, in die vorzugsweise einteilige, in der Leitungskupplung 11 eingebettete Kontaktzungen 17, 18, 19 und 20 hineinragen. Am äußeren Umfang der Steckerfassungen 15 und 16 sind den Überwurfmuttern 21 und 22 der Steckverbinder 10 und 23 zugeordnete Renkverbindungsmittel 24 angeformt. Mit 25 und 26 sind Riegel bezeichnet, die in den Überwurfmuttern 21, 22 verschiebbar gehaltert und zwischen die Renkverbindungsmittel einschiebbar sind, wenn die Überwurfmuttern 21, 22 festgezogen sind. Die Riegel 25, 26 dienen zusammen mit jeweils einem nicht dargestellten Plombendraht, der in der eingeschobenen Stellung der Riegel 25, 26 durch an den Überwurfmuttern 21, 22 ausgebildeten Ösen 27, 28 und in den Riegeln 25, 26 vorgesehenen Öffnungen 29, 30 durchgezogen und verplombt wird, als Verdrehsicherung.

Wie aus der Figur 3 ferner ersichtlich ist, ist der am Schutzrohr 31 abschließende Steckverbinder 23 für einen geraden Abgang der Geberleitungen ausgebildet, das heißt, die Tülle 32, die mittels einer Quetschverbindung 33 an dem Schutzrohr 31 befestigt ist, ist im Gegensatz zur Tülle 10 rotationssymmetrisch ausgebildet und kann auf relativ einfache Weise als Tiefziehteil hergestellt werden. Der Steckverbinder 10, dessen Tülle 1 ebenfalls mittels einer Quetschverbindung 34 an einem Schutzrohr 35 befestigt ist, zeigt in dem vorgenommenen Aufbruch einen im zylindrischen Abschnitt 4 der Tülle 1 aufgenommenen Stecker 36, der mit einem einer Dichtung 37 als Sitz dienenden Bund 38 versehen ist. Der Stecker 36 ist, was nicht dargestellt ist, für die Aufnahme von die Enden der Geberleitungen 39, 40, 41 und 42 kontaktierenden Buchsen ausgebildet, an denen den Kontaktzungen 17, 18, 19, 20 zugeordnete Kontaktfedern angeformt sind. Mit 43 ist eine in das Schutzrohr 35 eingesetzte Buchse bezeichnet, die einem störungsfreien Einführen der Geberleitungen 39, 40, 41 und 42 in das Schutzrohr 35 dienen. Der mit a bezeichnete Abstand zwischen der Stirnfläche des Steckers 36 und den Außenkonturen des Schutzrohres 35 ist das neuerungsgemäße Ergebnis, das einen minimalen Abstand von der Trennwand 12 ermöglicht und außerdem, falls erforderlich, ein rückwirkungsfreies Anbinden des Schutzrohres an der Trennwand gestattet.

## Patentansprüche

1. Steckverbinder für die Geberleitungen insbesondere für Fahrtschreibersysteme mit im wesentlichen rechtwinkligen Abgang und mit einem den Geberleitungen zugeordneten metallischen Schutzrohr
**dadurch gekennzeichnet,**
daß zwischen dem Stecker (36) des Steckverbinders (10) und dem Schutzrohr (35) eine die Geberleitungen (39, 40, 41, 42) umlenkende metallische Tülle vorgesehen ist, welche unter Anwendung eines Innenhochdruck-Umformverfahrens hergestellt ist.

2. Steckverbinder nach Anspruch 1,
**dadurch gekennzeichnet,**
daß die Tülle (8) nicht kozentrisch gekrümmt ist.

3. Steckverbinder nach Anspruch 1,
**dadurch gekennzeichnet,**
daß der Rohling im wesentlichen Z-förmig vorgeformt ist und daß nach dem Umformen des Rohlings durch geeignetes Beschneiden zwei Tüllen (1) gefertigt werden.

4. Steckverbinder nach einem der vorangegangenen Ansprüche
**dadurch gekennzeichnet,**
daß durch geeignetes Beschneiden des umgeformten Rohlings ein dem Befestigen der Tülle (1, 8) mittels einer Überwurfmutter (21) dienender Bund (6) freigestellt ist.
